# EUROPEAN PATENT APPLICATION

(11) **EP 2 932 844 A1**
(43) Date of publication of application: **21.10.2015**
(21) Application number: 15161314.8
(22) Date of filing: 27.03.2015
(51) Int. Cl.: A01N 25/34, A01N 53/00, C08K 5/00, F16L 57/00, H02G 3/04

(54) **Sleeve for covering wiring and piping with insecticidal effects**

(30) Priority: 15.04.2014 ES 201430516 U
(71) Applicant: Espiroflex, S.A., 08130 Santa Perpetua de Mogoda (Barcelona) (ES)
(72) Inventor: Sanchez Hellín, Bruno, 08130 Santa Perpetua de Mogoda (Barcelona) (ES)
(74) Representative: Ungria López, Javier

(57) **Abstract**

The invention relates to a sleeve (1) for covering wiring and piping with insecticidal effects, made of a plastic material. The sleeve comprises an insecticidal product permeating the plastic matrix forming the sleeve (1). The sleeve includes, as part of the manufacturing process thereof, a specific treatment with an insecticidal substance that enables said sleeve to have a repellent and/or deadly, effect on insects, i.e. an insecticide.

## Description

### Objet of the invention

The present invention relates to a sleeve for covering wiring and piping that has been specifically treated by means of a treatment with an insecticidal substance that helps to prevent the corrosive effect that some insect species, especially termites, have on the sleeves used to cover pipes.

It is applicable in the industry dedicated to the design, manufacture and marketing of covering and channeling systems for piping or wiring, and more particularly in the industry dedicated to the design and manufacture of pipecovering sleeves.

### Technical problem to be solved and background of the invention

Currently, there are a multitude of sleeve types for covering wiring and/or piping, specifically designed to prevent heat loss/increase in pipes, to electrically isolate an electrical conduit, or to retain any gas leaks.

Typically, said covering sleeves have to comply with certain requirements specified in different standards such as UNE standards, requirements relative to the fire-resistance effect that some of these sleeves must have, or resistance against blows, or their capacity to bend while maintaining their integrity.

Nevertheless, and in spite of the existence of specific regulations that govern the resistance to corrosion exerted by various types of insects, which such sleeves have to fulfill, no commercially available sleeve was found which includes, as part of the manufacturing process thereof, a specific treatment with an insecticidal substance that enables said sleeve to have a repellent and/or deadly effect on insects (insecticide).

In the state of the art, to provide a sleeve for covering wiring or piping with insecticidal effects, said sleeve is sprayed with an insecticidal product, after the manufacture thereof, and as a stage prior to or simultaneous with its installation at its definitive location.

This methodology, aside from being an obvious drawback when it comes to installing the sleeve at its definitive location, since there has to be an operator available to spray the sleeve along its entire length with the insecticidal product, causes the insecticidal product to behave rather poorly, as it gradually dilutes in the environment over time, with the resulting negative effect that said dispersion of the product may have on the environment.

The present invention solves the aforementioned drawbacks by providing a sleeve for covering wires and/or pipes with insecticidal effects, which is provided with said insecticidal effect by means of a specific treatment during the manufacturing process thereof.

### Description of the invention

The present invention relates to a sleeve for covering wiring and/or piping with insecticidal effects, made of a plastic material, which comprises an insecticidal product permeating the plastic matrix forming the sleeve.

The insecticidal product is preferably constituted by a hexafluomuron base.

The plastic of which the sleeve is made of is preferably flexible PVC.

In one embodiment of the sleeve, the latter comprises a superficial covering layer, and the insecticidal product permeates just the plastic matrix of said covering layer of the sleeve.

As an alternative, the insecticidal product may permeate the entire plastic matrix that forms the sleeve, and not only in one superficial layer thereof.

Depending on the desired insecticidal effect to be obtained, and the aggressiveness of the medium in which said sleeve is going to be installed, the sleeve comprises a different type of insecticidal product, and its concentration may be adjusted during the manufacturing process of the sleeve.

The sleeve is manufactured by means of a method that involves the addition of an insecticidal product to the plastic forming the sleeve.

Depending on whether the desired effect is obtaining a plastic matrix comprising an insecticidal product permeating the entire matrix, or just obtaining a superficial covering layer comprising said insecticidal product permeating a plastic matrix, the manufacturing method involves, respectively, either adding the insecticidal product, preferably in a liquid state, to the container containing the pellets of plastic prior to the extrusion of said plastic in order to melt and mix the plastic along with the insecticidal product, or to apply a sintering process to the insecticidal product, at a predetermined pressure and temperature, on the surface of the extruded plastic tube.

### Brief description of the figures

The present invention will be better understood in view of the following figure:

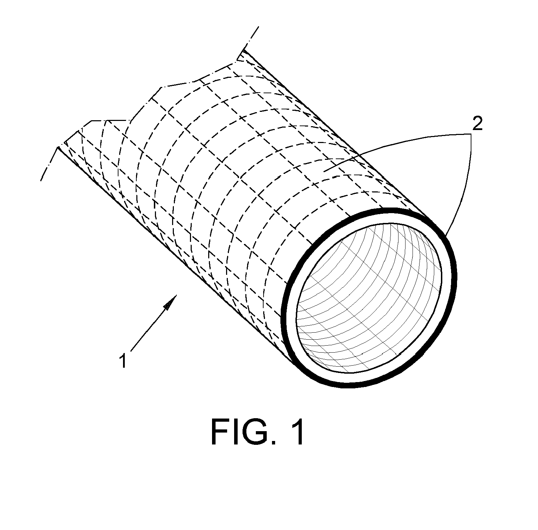

Figure 1: Shows a cross-sectional perspective view of the sleeve.

### Detailed description of an embodiment of the invention

The present invention relates to a sleeve (1) for covering wires and/or pipes with insecticidal effects.

The sleeve (1) of the present invention comprises insecticidal effects, especially indicated for protection against corrosion caused by termites.

In one preferred embodiment of the sleeve (1), a hexafluomuron-based insecticidal product is used.

According to the two preferred embodiments of the present invention, either the sleeve (1) comprises the insecticidal product uniformly distributed throughout the entire plastic matrix, or comes from the factory comprising a superficial covering layer (2), which in turn comprises an insecticidal product.

Depending on the desired insecticidal effect and on how aggressive the environment is where the sleeve (1) is going to be installed, one amount or another of insecticidal product is added during the manufacturing process of the sleeve (1), the concentration of said insecticidal product thus varying either throughout the plastic matrix of the sleeve (1), or in the covering layer (2) of the sleeve (1), according to the embodiment in question.

The sleeve of the present invention is manufactured according to a method that comprises a treatment with an insecticidal product.

In one preferred embodiment of the sleeve (1), said treatment comprises the addition of an insecticidal product prior to the extrusion process of the sleeve (1). Typically, a certain amount of insecticidal product is added in a liquid state to the container of the plastic that is going to form the sleeve (1) while said plastic is in the form of pellets. In the preferred embodiment of the sleeve (1), the plastic used to manufacture the sleeve (1) is flexible PVC.

In this way, when the plastic is melted, a homogeneous distribution of the insecticidal product in the plastic material is achieved.

In an alternative embodiment, the manufacturing process of the sleeve (1) comprises carrying out a sintering treatment, which applies the insecticidal product superficially, thus forming the superficial covering layer (2), said treatment being carried out at a predetermined pressure and temperature.

The sleeve (1) object of the present invention is safe for the environment and does not cause soil degradation due to an accumulation of dangerous substances.

The sleeve (1) does not contain heavy metals and complies with the ROHS and REACH regulations and directives, relating respectively to dangerous metals and chemical substances.

The sleeve (1) does not contain water-soluble substances, so under no circumstances does it endanger the water resources in the location where it is installed, and the components of said sleeve (1) are chemically stable, as the polymer matrix thereof does not migrate.

The insecticidal treatment applied to the sleeve (1) of the present invention preferably acts against termites without killing them instantaneously, attacking their reproductive mechanisms and destroying them step by step:
- it attacks their growth during metamorphosis, as they pass from larvae and pupa to their adult state (in this way, and given that they are constantly reproducing, the colony decreases from the very day the sleeve (1) is put in place);
- it repels them from laying their eggs in the area;
- it disturbs and pushes them away from their feeding area.

## Claims

1. A sleeve (1) for covering wiring and piping with insecticidal effects, made of a plastic material, **characterized in that** it comprises an insecticidal product permeating the plastic matrix that forms the sleeve (1).

2. The sleeve (1) for covering wiring and piping with insecticidal effects according to claim 1, **characterized in that** the insecticidal product is constituted by a hexafluomuron base.

3. The sleeve (1) for covering wiring and piping with insecticidal effects according to claim 1, **characterized in that** the plastic of which the sleeve (1) is made is PVC.

4. The sleeve (1) for covering wiring and piping with insecticidal effects according to claim 1, **characterized in that** the sleeve (1) comprises a superficial covering layer (2), and the insecticidal product permeates just the plastic matrix of said covering layer (2) of the sleeve (1).
